# EUROPEAN PATENT APPLICATION

(11) **EP 1 247 583 A1**
(43) Date of publication of application: **09.10.2002**
(21) Application number: 01120515.0
(22) Date of filing: 28.08.2001
(51) Int. Cl.: B03B 9/06, G06F 17/60, B09B 3/00

(54) **Recycling system**

(30) Priority: 02.04.2001 JP 2001103440
(71) Applicant: Tohsho Logitic Corporation, Hatsukaichi-shi, Hiroshima (JP)
(72) Inventor: Shimada, Masaharu, Otake-shi, Hiroshima (JP); Kitayama, Yoshifumi, Hiroshima-shi, Hiroshima (JP)
(74) Representative: Glawe. Delfs. Moll

(57) **Abstract**

A recycling system is proposed which can retrieve reusable articles at a low cost. For example, a maker of welding wires ship the wires to a user with the wires wound on bobbins. The user sends a request for taking back empty bobbins to a center after consuming the welding wires. The center notifies a forwarder of a request for retrieval. The forwarder retrieves the empty bobbins from the user and bring them to a recycler. When the maker gives an order for empty bobbins to the center, the center notifies this to the recycler and the recycler ships the recycled bobbins to the maker.

## Description

### BACKGROUND OF THE INVENTION

This invention relates to a recycling system for recyclable articles.

For example, bobbins for winding wires for welding are usually made of inexpensive synthetic resin. But they are difficult to handle because they are expensive to retrieve and reuse them, and environmental pollution problem arises if they are wasted. Thus they are being replaced by paper-made ones. But advantages of low cost of synthetic resin are attractive.

An object of this invention is to provide a recycling system which can retrieve recyclable articles at a low cost.

### SUMMARY OF THE INVENTION

According to this invention, there is provided a recycling system for recycling reusable articles wherein a maker who manufactures contents of reusable articles on which is displayed an identification code showing at least the name, size and weight of the article, fills the articles with the contents and delivers the articles, a user who consumes the contents, a forwarder, and a recycler who recycles the articles can send and receive data communication to and from a center that controls data in a centralized manner, wherein after the contents have been consumed, the user sends a request for taking back empty articles to the center together with the identification code, wherein in response to the request, the center sends a request for retrieval to the forwarder, wherein in response to the request, the forwarder retrieves the empty articles from the user and delivers them to the recycler, wherein when the center receives an order request from the maker, the center notifies the request to the recycler, and wherein in response to the request, the recycler delivers recycled empty articles to the maker.

Preferably, the center has a data base file in which at least one of phone numbers and fax numbers are linked to addresses and names, to make it possible to search the address and name in response to a retrieval request by telephone or facsimile from the user.

The center may have a data base file in which area codes of phone numbers and fax numbers are linked to areas to make it possible to search the area where the user is located in response to a retrieval request by telephone or facsimile from the user and send the retrieval request to the nearest forwarder. Further the locations of the user, forwarder and recycler may be indicated in terms of coordinates on a map so that collecting of articles can be made efficiently.

Part or whole of the data communication may be carried out through the internet.

Other features and objects of the present invention will become apparent from the following description made with reference to the accompanying drawings, in which:

### BRIEF DESCRIPTION OF THE DRAWINGS

Fig. 1 is a diagram schematically showing the recycling system of this invention;
Fig. 2 is a block diagram showing flows of articles and information in the recycling system;
Fig. 3A is a perspective view showing a bobbin; and
Fig. 3B is a plan view showing an identification code.

### DETAILED DESCRIPTION OF THE PREFERRED EMBODIMENT

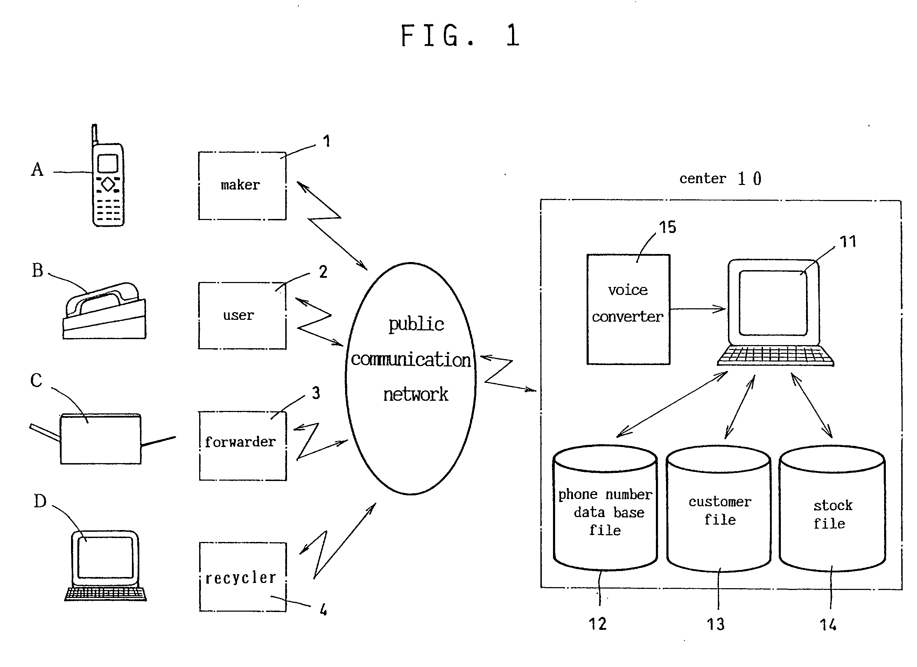

Hereinbelow, an embodiment of this invention is described with reference to the attached drawings. Fig. 1 shows the outline of the recycling system according to this invention. As shown, a maker 1 of welding wires which are wound around bobbins, a user 2 who uses the welding wires, a freight forwarder 3, and a recycler 4 such as an empty bobbin cleaner can send and receive data to and from a center that controls the data in a centralized manner, through a public communication network using some communication means. As communications means, there are cellphones A, ordinary phones B, facsimiles C and personal computers D. On the other hand, the center 10 is provided with a central processing unit 11 and a voice converter 15 as necessary. Also, there are provided a phone number data base file 12, a customer file 13, a stock file 14, etc. Using these files, the central processing unit 11 operates and controls data sent to and received from the maker 1, user 2, forwarder 3 and recycler 4.

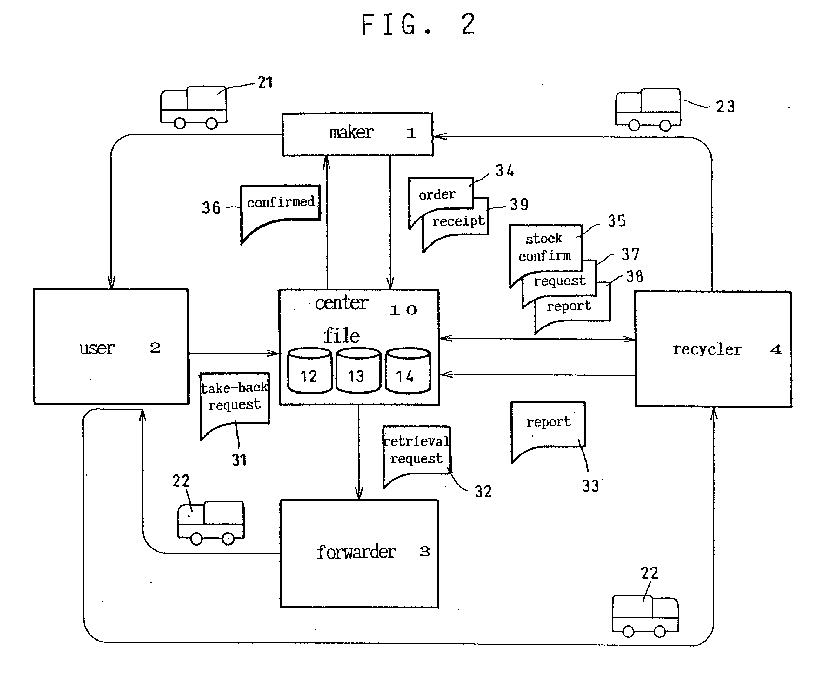

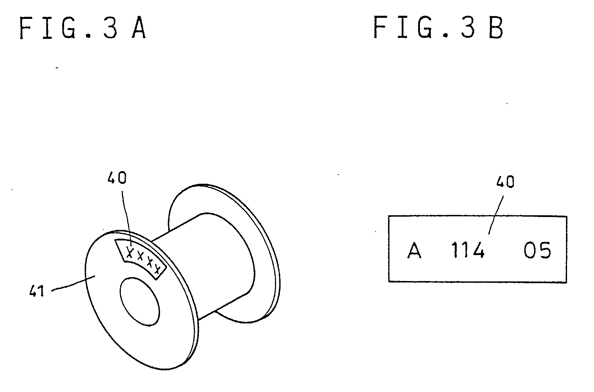

With reference to Fig. 2, the flows of articles and information will be described. First, welding wires wound around bobbins are shipped from the maker 1 to the user 2 by a suitable transportation means 21 such as a truck. As a result of consumption of the welding wires at the user's place, empty bobbins remain. On each of these bobbins, an identification code 40 as shown in Figs. 3A, 3B is provided beforehand on e.g. the outer surface of a flange 41. "A" in the first digit of the code 40 indicates the name of the article, "114" in the second to fourth digits does the size (m³), and "05" in the fifth to sixth digits does the weight (kg). These figures show mere examples and suitable figures should be displayed. A bar code may be added.

At the user's place, when there are empty bobbins, a request 31 for taking back is issued to the center 10 by a suitable communication means. At this time, not only the number of empty bobbins but their respective identification codes are notified at the same time. If the communication means is a telephone, it is preferable to convert to digital information by use of a voice-converter 15. Also, since the phone or fax number of the user 2 is known at the center 10, by use of the phone and fax number data base file 12, the address of the user 2 can be searched. Further, a customer file 13 in which the address, name, phone number, etc. of the user 2 are recorded, may be formed beforehand, and it may be searched.

The center 10 notifies the forwarder 3 of the name, size and weight of articles obtained from the identification code 40, together with the address, phone number, etc., as a request for retrieval 32. The communication means may be of any kind. But if the computer of the forwarder 3 and the central processing unit 11 are connected together by an online circuit, it is possible to process the request for taking back 31 into a retrieval request 32 and send it immediately to the forwarder 3.

In order to select a suitable forwarder 3 at the center 10, it is convenient to retain a table in which the area codes of phone and fax numbers are associated with the respective areas, locate the area by searching the table in response to the communication from the user 2, and send the retrieval request 32 to the nearest forwarder 3 by searching the areas where pre-registered forwarders 3 are located. Also, based on the positional relations to the below-described cleaner, it is possible to select the most efficient forwarder 3. Besides, if a suitable map information data base is retained at the center 10, the location of the user can be indicated in terms of coordinates. On the other hand, if the locations of the forwarders 3 and the recyclers 4 are recorded in terms of coordinates beforehand, it is possible to easily select the forwarder nearest to the user 2. Further it is possible to select a forwarder 3 who is the most efficient in relation to the user 2 and the recyclers 4. Of course, it is possible to take into consideration the positional relation between them and the maker 1.

The forwarder 3 thus receives the retrieval request 32, retrieves empty bobbins from the user 2, and bring them to the recycler 4. The recycler sends to the center 10 a report 33 that they have received the empty bobbins, by a suitable communication means. The center 10 performs renewal of the stock file 14 corresponding to the number of the empty bobbins. For bobbins not reusable such as damaged ones, report is made to the center 10 each time. For bobbins that have been cleaned, too, report is preferably made to the center 10 each time.

The recycler 4 temporarily keeps empty bobbins that have been washed, classified by kind, and forwards them upon receipt of an order 34 from the maker 1. The order 34 is issued from the maker 1 to the center 10, and if it is confirmed against the stock file 14 at the center 10 that a required number of bobbins are available, an order is issued to the recycler 4 as it is. But since the stock file 14 is sometimes not renewed to suit the actual circumstances due e.g. to a time lag, request of stock confirmation 35 is made to the recycler 4. If a stock is confirmed, the center 10 makes a report of confirmation done 36 to the maker 1 and at the same time issues an order request 37 to the recycler 4. The cleaning company delivers empty bobbins to the maker 1 by a transportation means 23, and makes a report of delivery completed 38 to the center 10. Also, the maker 1 issues a receipt report 39 to the center 10.

In this embodiment, any of the maker 1, user 2, forwarder 3 and recycler 4 is not limited to singular. Reusable articles are not limited to bobbins either, but can be applied to various articles such as goods-delivery boxes, containers, cassettes, bottles, or the like. Also, the recycler may be a company who performs not only cleaning but repairing and the like. Further, if cellphones and personal computers are used as communication means, it is possible to carry out data communication through the internet.

According to this invention, as described above, when the user simply makes a request for taking back reusable articles, articles that are useless for the user are retrieved, so that he himself does not have to dispose of them. Since the articles retrieved are supplied according to the requirement of the maker in a reusable state, stock control by the user becomes easy, and the purchasing cost for new products and the disposal cost for used articles are almost zero, and only the cleaning cost and the purchasing cost of recycled products increase. Thus, as a whole, a marked cost reduction can be expected, and further this reduces waste pollution.

## Claims

1. A recycling system for recycling reusable articles wherein a maker who manufactures contents of reusable articles on which is displayed an identification code showing at least the name, size and weight of the article, fills the articles with the contents and delivers the articles, a user who consumes said contents, a forwarder, and a recycler who recycles said articles can send and receive data communication to and from a center that controls data in a centralized manner, wherein after the contents have been consumed, said user sends a request for taking back empty articles to said center together with said identification code, wherein in response to the request, the center sends a request for retrieval to said forwarder, wherein in response to the request, said forwarder retrieves the empty articles from said user and delivers them to said recycler, wherein when the center receives an order request from said maker, the center notifies the request to said recycler, and wherein in response to the request, said recycler delivers recycled empty articles to said maker.

2. The recycling system as claimed in claim 1 wherein said center has a data base file in which at least one of phone numbers and fax numbers are linked to addresses and names to make it possible to search the address and name in response to a retrieval request by telephone or facsimile from said user.

3. The recycling system as claimed in claim 1 wherein said center has a data base file in which area codes of phone numbers and fax numbers are linked to areas to make it possible to search the area where said user is located in response to a retrieval request by telephone or facsimile from said user and send the retrieval request to the nearest forwarder.

4. The recycling system as claimed in claim 1 wherein the locations of said user, forwarder and recycler are indicated in terms of coordinates on a map.

5. The recycling system as claimed in claim 1 wherein at least part of said data communication is carried out through the internet.
